(19) Europäisches Patentamt / European Patent Office / Office européen des brevets

(11) **EP 2 069 233 B1**

(12) **EUROPEAN PATENT SPECIFICATION**

(45) Date of publication and mention of the grant of the patent:
**09.04.2014 Bulletin 2014/15**

(51) Int Cl.:
*C01B 17/50* (2006.01)    *C01B 17/74* (2006.01)
*F01K 21/04* (2006.01)    *F01K 7/16* (2006.01)
*H02K 7/18* (2006.01)

(21) Application number: **07815846.6**

(22) Date of filing: **19.09.2007**

(86) International application number:
**PCT/CA2007/001653**

(87) International publication number:
**WO 2008/034229 (27.03.2008 Gazette 2008/13)**

(54) **GAS TURBINE TOPPING IN SULFURIC ACID MANUFACTURE**

GASTURBINENVORSCHALTUNG BEI DER SCHWEFELSÄUREHERSTELLUNG

PRODUIT DE TÊTE DE TURBINE À GAZ DANS LA FABRICATION D'ACIDE SULFURIQUE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **19.09.2006 US 845514 P**

(43) Date of publication of application:
**17.06.2009 Bulletin 2009/25**

(73) Proprietor: **Wojak, Bogdan**
**Lakeland, Florida, 33801-4807 (US)**

(72) Inventor: **Wojak, Bogdan**
**Lakeland, Florida, 33801-4807 (US)**

(74) Representative: **Petraz, Gilberto Luigi et al**
**GLP S.r.l.**
**Viale Europa Unita, 171**
**33100 Udine (IT)**

(56) References cited:
**EP-A- 0 669 390      JP-A- 11 263 606**
**JP-A- 11 263 606     JP-A- 60 191 007**
**JP-A- 60 191 007     US-A- 6 138 456**
**US-A- 6 138 456**

- **HARMAN R T C ET AL: "Gas turbine topping for increased energy recovery in sulphuric acid manufacture" APPLIED ENERGY, ELSEVIER SCIENCE PUBLISHERS, GB, vol. 3, no. 1, 1 January 1977 (1977-01-01), pages 23-40, XP025578207 ISSN: 0306-2619 [retrieved on 1977-01-01]**
- **HARMAN ET AL.: 'Gas turbine topping increased energy recovery in sulfuric acid manufacture' APPLIED ENERGY vol. 3, 1977, XP025578207**

Description

**TECHNICAL FIELD**

The invention relates generally to a method of generating electrical power using sulfur and, in particular, to combustion of sulfur in a gas turbine generator.

**BACKGROUND**

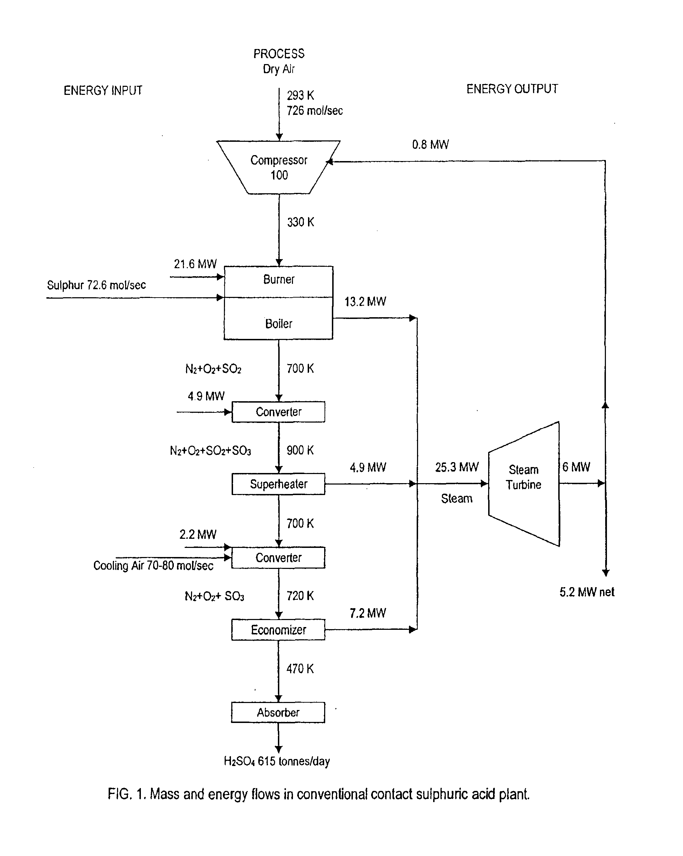

Apart from certain limitations imposed by the chemistry of the conversion stage, the steam-raising system associated with a sulfuric acid plant is fairly conventional (Fig. 1). Furthermore, in a typical sulfuric acid plant, so long as the air supply to the sulfur burner is rigorously dried, ordinary steels may be used throughout the plant with no serious corrosion problems. Subsequently, with the increasing use of gas turbines in conventional electricity plants, both as the prime driver and as "topping" devices preceding a steam-raising system, the same techniques were proposed for the energy recovery from sulfuric acid manufacture. For a typical case, the net energy recovery as electric power can be improved by 60-70 percent over that possible with simple steam-raising equipment (see R.T.C. Harman et al. "Gas turbine topping for increased energy recovery in sulfuric acid manufacture", Applied Energy, Vol. 3 (1977)).

The temperatures which must be maintained at various parts of the plant are determined by either the equilibrium or the kinetic requirements of the sulfur trioxide manufacture and will be the same for any size of plant. The only scale factor so far as the energy recovery is concerned would be the mass flow which remains unresolved by prior art techniques.

The most direct undertaking of liquid sulfur burning in the combustor of gas turbines is described by Harman at al., in "Gas turbine topping for increased energy recovery in sulfuric acid manufacture" Applied Energy, Vol. 3 (1977) and by Uji Moichi in Japanese Patents Nos., 60191007, 60191008, 60191009, and 60221307.

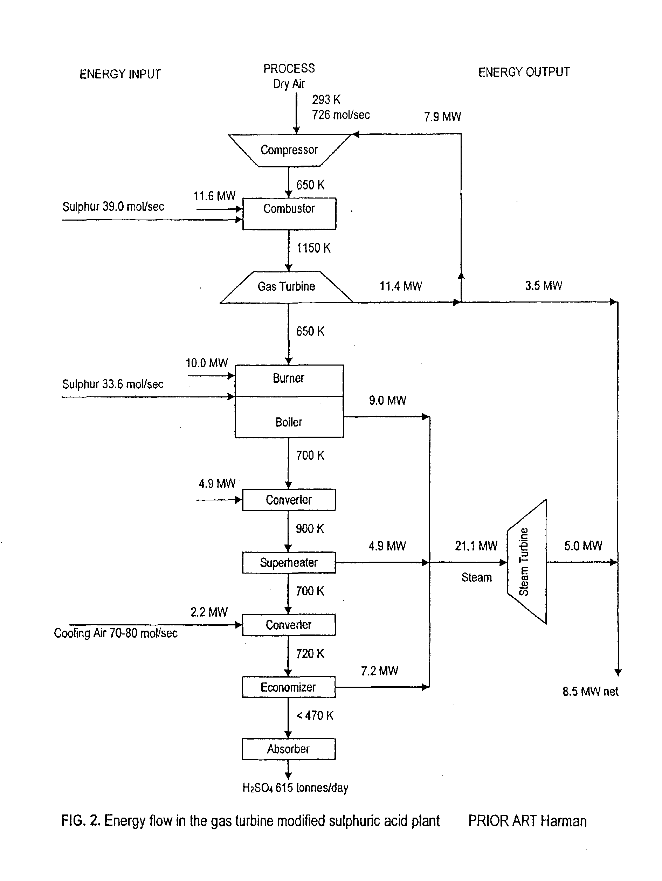

Harman at al. used, for the purpose of modeling a gas turbine plant, a Rolls-Royce "Tyne" engine which has an air flow closely matched to a 600 tonne/day acid plant (Fig. 2). The material corrosion problem appears to be avoidable because the Tyne's particular high-pressure (HP) turbine alloys, air-cooled and with modern aluminized coatings, would be operating below their corrosion threshold temperature in the given atmosphere of dry sulfur dioxide without sodium salts. There are better materials now available if needed.

The best approach (to date) for incorporating a gas turbine into a sulfuric acid plant entails use of a gas turbine exhausting directly into the converter of a conventional plant. This might, at first, be considered workable because the exhaust of a gas turbine such as the Tyne is in the temperature range of converter catalysts. However, as Applicant has realized, such an implementation would, in reality, be precluded by the maximum temperature constraints of the turbine. In other words, the metallurgic limit of the turbine blades limit the maximum operating temperature at the inlet of the turbine. Accordingly, as Applicant has realized, it is not technically feasible to combust sulfur and to directly discharge the extremely hot sulfur dioxide directly into a gas turbine for energy extraction as this would cause heat-induced damage to the turbine blades.

For example, in the Tyne gas turbine, the air temperature at the exit of the compressor is approximately 650 K (for a compression ratio of 13.5) and the maximum turbine entry temperature is approximately 1150 K. Thus, it is clearly not possible to burn all the sulfur required. The remainder of the sulfur must then be burned in the exhaust stream exiting from the turbine. The reheated gas must then be cooled in the boiler to the correct temperature for admission to the catalyst towers.

The Tyne study (Harman et al.) concludes that the combustion system of a gas turbine engine appears capable of burning liquid sulfur, the major modification necessary being temperature control of the plumbing and spray nozzles. This obviates the possible need for a separate refractory-lined burner, fed by the engine compressor and exhausting to the turbine, which would be a potentially very hazardous pressure vessel and would add serious complication and expense to the gas turbine engine installation.

Uji Moichi also failed to burn all sulfur required by sulfuric acid plant through gas turbine. In various arrangements he combined pressurized and ordinary-pressure furnaces adding even more complication and expense to the gas turbine engine installation (Fig. 3 and 4). His concept can be best characterized by two patents, namely JP60191007 and JP60191008.

With reference to Fig. 3, the English-language translation of the abstract of JP60191007 describes a process in which the temperature of the gas containing $SO_2$ coming out from an ordinary-pressure sulfur-burning furnace 1 is lowered by a waste heat boiler 2, and the $SO_2$ in the gas is converted into $SO_3$ by a converter 4. Then, the gas is sent into a sulfuric-acid-condensing boiler 17 wherein the reaction, $SO_3+H_2O=H_2SO_4$, and the condensation, $H_2SO_4+H_2O$, are carried out. The condensed sulfuric acid is taken out as the product, and the high-pressure and the low-pressure superheated steam are simultaneously formed. Meanwhile, a part of said low-pressure superheated steam is mixed into compressed air coming out from a compressor 15, and the mixed gas is introduced into a pressurized sulfur-burning furnace 14 along with molten sulfur. The high-temperature and high-pressure gas containing $SO_2$ generated from the

furnace 14 is sent into a turbine 16 to work the turbine. The waste gas discharged from the turbine 16 is introduced into the furnace 1 along with molten sulfur, and the sulfur is burned.

In referring to Fig. 4, the English-language translation of the abstract of JP60191008 describes a process in which the dry air compressed by a compressor 9 is heat-exchanged with a gas discharged from a turbine 8 in a heat exchanger 12, and heated to high temperatures. The heated air and molten sulfur, whose amount to be burnt is reduced, are sent into a pressurized sulfur-burning furnace 11 to burn the sulfur. The formed high-temperature and high-pressure gas containing $SO_2$ in low concentration is introduced into the turbine 8 to work the turbine, and then heat-exchanged with the compressed air in the heat exchanger 12 to lower the temperature. Then the $SO_2$-containing gas is sent along with the molten sulfur into an ordinary-pressure sulfur-burning furnace 1. The formed high-temperature and high-pressure gas having high $SO_2$ content is sent into a waste heat boiler 2 wherein the heat is recovered, and then sent into a converter 4 through a gas filter 3 to convert $SO_2$ into $SO_3$. Superheated steam is taken out from a superheater 5. Meanwhile, gaseous $SO_3$ is sent into an absorption tower 7, and absorbed in concentrated sulfuric acid to obtain the product sulfuric acid.

Document JP-A-11263606 discloses a method for producing sulfuric acid comprising the step of incompletely burning liquid sulfur producing a high temperature, high pressure sulfur dioxide gas stream which is used to work a turbine.

Although the prior art proposes some basic techniques for energy recovery in the context of sulfuric acid production, improvements to these prior-art technologies remain highly desirable.

## SUMMARY OF THE INVENTION

An object of the present invention is to improve upon the prior art technology so as to provide an improved process and system for using a gas turbine to recover energy from the combustion of sulfur.

In general, the present invention provides a method of combusting an adequate volume of sulfur in relation to a required production volume of a sulfuric acid plant such that a product of the combustion, sulfur dioxide, is expended in a gas turbine configured as a "topping" device preceding a steam-raising system in order to enable energy recovery from the manufacture of sulfuric acid.

In accordance with a first aspect of the present invention, a method of generating electrical power using sulfur comprises steps of combusting oxygen with a stoichiometric quantity of sulfur comprising predominantly diatomic sulfur to generate hot sulfur dioxide gas and then mixing a cooling gas substantially cooler than the hot sulfur dioxide gas with the hot sulfur dioxide gas to produce a mixed working gas for driving a gas turbine. The resulting mixed working gas has a temperature less than a maximum allowable temperature determined by a metallurgic limit of turbine blades in the gas turbine to enable the gas turbine to generate electrical power.

In accordance with second main aspect of the present invention, a system for generating electrical power using sulfur comprises a combustor for combusting oxygen with sulfur that comprises predominantly diatomic sulfur to produce hot sulfur dioxide gas and an ejector for mixing the hot sulfur dioxide gas with a cooling gas injected into the ejector in a sufficient quantity that a resulting mixture of the hot sulfur dioxide and the cooling gas has a temperature less than a maximum allowable temperature determined by the metallurgic limit of turbine blades of a gas turbine. The gas turbine is thus driven by the mixture of hot sulfur dioxide and cooling gas to generate electrical power.

The sulfur dioxide discharged from the gas turbine is then used downstream to generate steam for driving a steam turbine (that is separate and distinct from the gas turbine) to generate additional electrical power. The gas turbine thus acts as a "topping device" preceding the steam-raising system. In other words, the waste heat created when sulfuric acid is manufactured can be harnessed using two separate and distinct electricity-generating turbines, namely the (downstream) steam turbine and the (upstream) gas turbine. The latter, by virtue of the present invention, can be driven with partially cooled sulfur dioxide from the combustion reaction occurring in the sulfur-burning combustor. By mixing a cooler gas (air or recycled sulfur dioxide) with the hot sulfur dioxide gas emerging from the combustor, the resulting mixture is cooled to a manageable temperature that does not cause heat damage to the turbine blades of the gas turbine (of the so-called topping device), thus enabling maximal energy recovery from the production of sulfuric acid.

## BRIEF DESCRIPTION OF THE DRAWINGS

The present invention is described with reference to the following drawings, in which:

Fig. 1 is a process flowchart depicting mass and energy flows in a conventional contact sulfuric acid plant;
Fig. 2 is a process flowchart depicting mass and energy flows according to Harman's modified process;

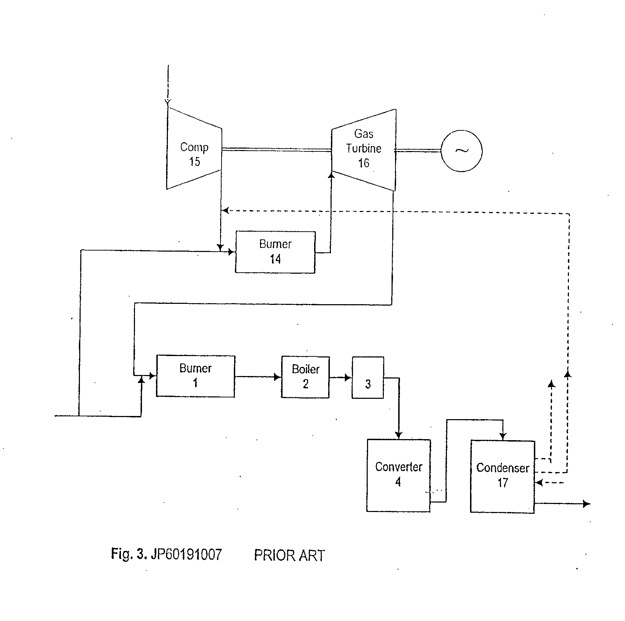

Fig. 3 is a schematic depiction of the system of JP60191007;

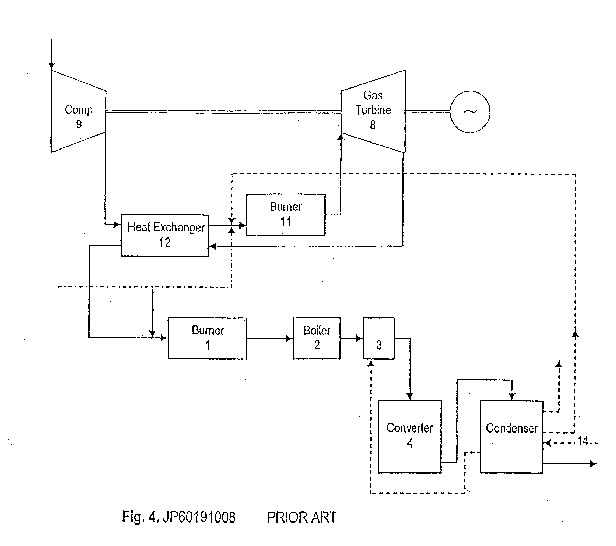

Fig. 4 is a schematic depiction of the system of JP60191008;
Fig. 5 is a schematic depiction of a sulfur evaporator for use with the present invention;
Fig. 5A is a graph showing the equilibrium composition of sulfur vapor as a function of temperature;

Fig. 6 is a schematic depiction of a system in accordance with an embodiment of the present invention;

Fig. 7 is a process flowchart depicting mass and energy flows for the modified sulfuric acid plant in accordance with embodiments of the present invention; and

Fig. 8 is a schematic depiction of a system that recycles $SO_2$ in accordance with another embodiment of the present invention.

## DETAILED DESCRIPTION

The problem of combusting an adequate volume of sulfur in relation to the required production volume of sulfuric acid in a sulfuric acid plant is solved by the present invention by employing a submerged sulfur combustion furnace to produce sulfur dioxide and sulfur vapor and then by combusting the sulfur vapor in relation to predetermined amounts of:

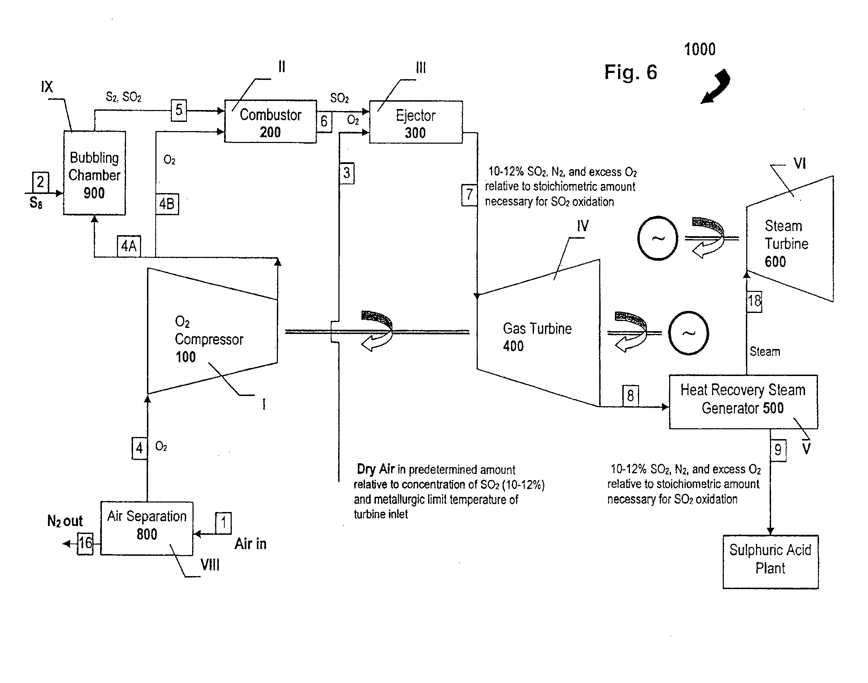

1. Dry air that is supplied in an amount that is commensurate with a desired concentration of $SO_2$ such that the temperature of the turbine inlet remains within a range set by the metallurgic limit of the turbines blades, which represents the first main embodiment, depicted in Fig. 6; or

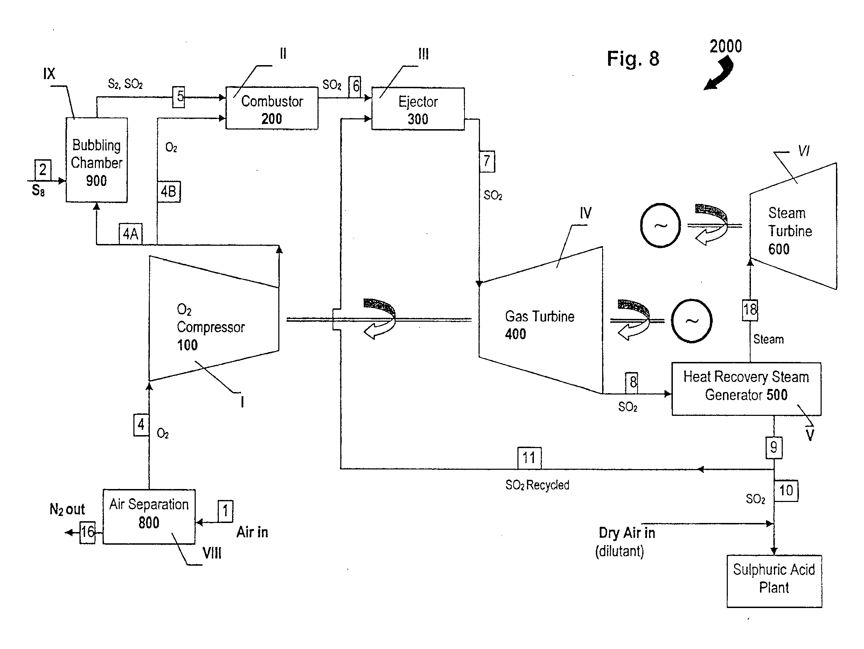

2. Recycled sulfur dioxide that is supplied in relation to the amounts of pure oxygen (as the oxidizing agent) and diatomic sulfur (as the fuel), which represents the second main embodiment, depicted in Fig. 8.

Reference will now be made in detail to specific implementations of the preferred (main) embodiments of the invention, examples of which are illustrated in the accompanying drawings.

Referring to FIG. **6**, there is shown a system **1000** adapted for combusting an adequate volume of sulfur in relation to a required production volume of sulfuric acid in a sulfuric acid plant and for subsequently expending all (or substantially all) of the product of the combustion reaction, namely the sulfur dioxide ($SO_2$), in a gas turbine configured as a "topping" device that precedes a steam-raising system to thereby recover energy from the manufacture of sulfuric acid, in accordance with one aspect of the present invention. The combined cycle system **1000** comprises eight main stages **(I, II, III, IV, V, VI, VIII,** and **IX)** each having at least one unit to assist in the process of burning sulfur to produce sulfur dioxide and generate electric power. As is illustrated in the first main embodiment of the present invention, the Brayton-cycle of the system **1000** comprises an $O_2$ compressor **100** at stage **I,** an $O_2$ combustor **200** at stage II, an ejector **300** at stage **III,** and a gas turbine **400** at stage **IV,** which is mechanically coupled to, and thus drives, the oxygen compressor **100.** The Rankine-cycle of the system **1000** comprises a heat-recovery steam generator (HRSG) **500** at stage **V,** and a steam turbine **600** at stage **VI.** The system **1000** also comprises an oxygen source 800 at stage **VIII** (also referred to herein as an "air separation unit" as it takes in air and separates the $O_2$ from the $N_2$), and a sulfur-submerged combustion furnace **900** at stage **IX** (also referred to herein as a "bubbling chamber", "sulfur vaporizer", or "sulfur evaporator", whose function will be described in greater detail below).

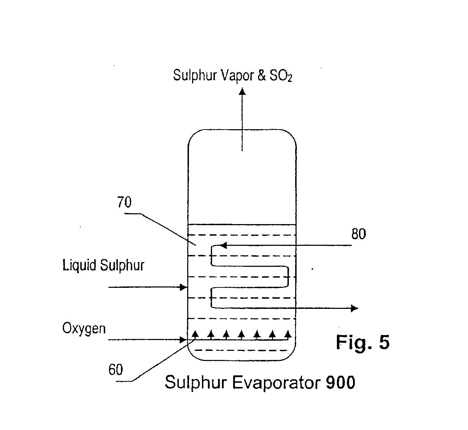

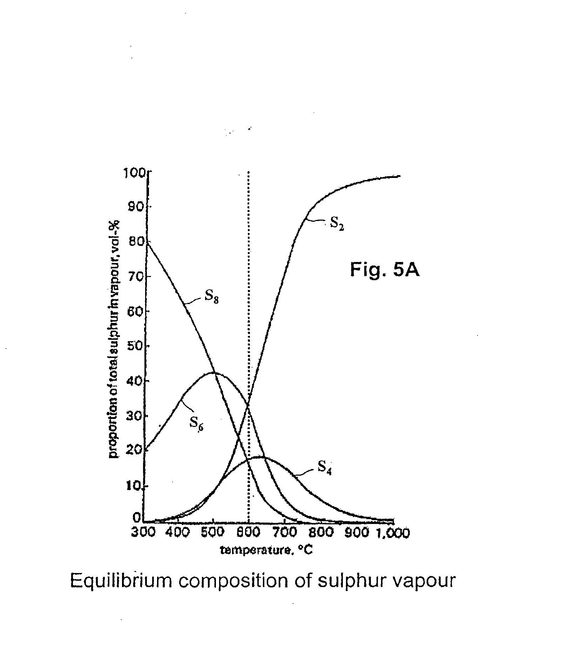

Preferably, sulfur dioxide gas ($SO_2$) is obtained by melting sulfur, evaporating it by bubbling oxygen **60** through the molten sulfur **70** in the submerged combustion furnace **900** at stage **IX,** and oxidizing the sulfur vapor with oxygen in the combustor **200** at stage **II.** As shown in Fig. 5, an appropriate amount of $S_8$ is delivered via conduit **80** into the bubbling chamber (sulfur evaporator **900**). To minimize heat damage to the components of stage **IV** (e.g. the turbine blades) while maintaining the requisite $SO_2$ gas concentration (10-12%) for the sulfuric acid plant, predetermined amounts of a cooling gas such as dry air are delivered to ejector **300** at stage III through conduit **3.** The ejector **300** at stage **III** transfers the energy produced during combustion of $S_2$ in the combustor **200** at stage **II** to generate a working fluid mixture at a much lower temperature than the hot sulfur dioxide gas emerging from the combustor **200** (see N. Lior, "Advanced Energy Conversion to Power", Energy Convers. Mgmt, Vol. 38, No. 10-13, pp. 941-955 (1997) and see also US 6,138,456). While the compressed $O_2$ is delivered to the combustor **200** through conduit **4B** from the $O_2$ compressor **100,** predetermined amounts of dry air (or other cooling gas) are delivered into the ejector **300** at stage **III** thus forming the working fluid for the gas turbine **400** at stage **IV.** The dry air is preferred over other gases or compositions of gases because it does not react or corrode the turbine components or other components downstream. The dry air not only carries oxygen but also acts as a dilutant and a cooling agent. The dry air from conduit **3** is thus mixed in the ejector **300** with the hot $SO_2$ exiting from the combustor **200,** thereby cooling the hot combustion product (the $SO_2$) to create a mixed working gas that is at a substantially lower temperature than the hot $SO_2$ emerging from the combustor **200** so that this (partially cooled) mixed working gas does not damage the turbine blades of the gas turbine **400.** In other words, mixing the dry air with the hot $SO_2$ ensures that the temperature of the resulting mixture (the mixed working gas) is below the maximum allowable temperature (metallurgical limit) of the turbine blades of the gas turbine **400.** As a corollary benefit, all of the requisite sulfur (i.e. a stoichiometric amount) can be burned in the combustor **200,** thus obviating the need to burn any residual sulfur in the downstream exhaust of the gas turbine **400.**

To partially summarize, therefore, dry air in a predetermined amount relative to the requisite concentration of $SO_2$ (10-12%) is injected into the ejector **300** to cool the working gases to below the metallurgic limit (maximum allowable operating temperature) of the turbine blades of the turbine **400**. The ejector **300** thus emits into conduit 7 a mixture of gases that act as the working fluid to drive the turbine **400**. These gases comprise 10-12% $SO_2$, $N_2$, and excess $O_2$ relative to the stoichiometric amount necessary for $SO_2$ oxidation. The same, or substantially similar, composition of gases is emitted by the heat recovery steam generator **500** into conduit 9 that leads to the sulfuric acid plant. Other than the dry air being injected into the ejector **300,** air is also introduced into the air separation unit **800** via conduit **1** while $S_8$ is delivered into the bubbling chamber **900**. The process generates electrical power while providing the $SO_2$ needed for oxidation in the manufacture of sulfuric acid. The only other byproducts are nitrogen and oxygen gases, which are harmless for the environment. This technology thus enables electricity to be generated without harmful emissions to the environment by taking advantage of the prodigious amount of waste heat that is available as a result of the manufacture of sulfuric acid.

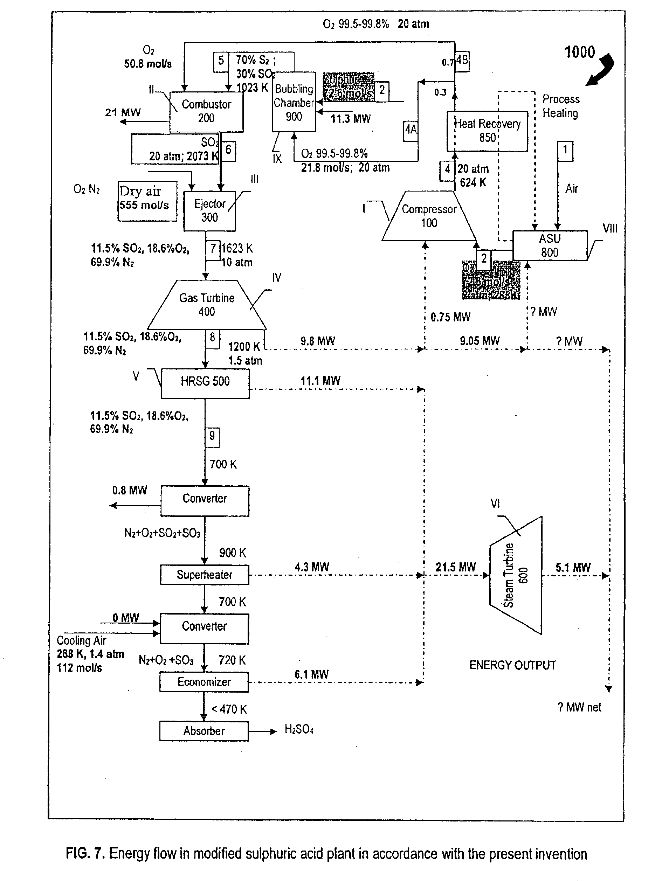

Fig. 7 is a process flowchart depicting mass and energy flows for the modified sulfuric acid plant in accordance with embodiments of the present invention, in particular the system **1000** presented above. Fig. 7 shows, by way of example, typical temperature and pressure values as well as the gaseous composition at various steps in the process. The mass and energy balance shown in Fig. 7 is based on a production of 615 tonnes per day of sulfuric acid, which corresponds to 72.6 mol/s of sulfur expressed as $S_1$ (the rate of sulfur being fed into the bubbling chamber **900).** The rate of sulfur being injected into the bubbling chamber **900** to achieve a production output of 615 tonnes/day of sulphuric acid ($H_2SO_4$) can be calculated as follows:

$$g\ S\ /\ g\ H2SO4 = 32\ g\ /96\ g$$

$$615\ tonnes/day = 615 \times 1e6\ g/day = 615 \times 1e6\ g\ /(24 \times 3600)\ s = 7118\ g/s\ of\ H_2SO_4$$

$$The\ sulphur\ feed\ can\ then\ be\ calculated\ as\ (32\ g\ S/\ 96\ g\ H2SO4) \times 7118\ g/s\ H_2SO_4\ = 2324\ g\ sulphur/s$$

$$In\ molar\ terms\ (with\ a\ basis\ of\ sulphur\ equal\ to\ \mathbf{S_1}),\ we\ get\ 2324\ g\ /32\ g\ per\ g\text{-}mol\ per\ second = 72.6\ g\text{-}moles/s\ of\ sulphur\ as\ \mathbf{S_1}.$$

In the scenario presented in Fig. 7, the air separation unit (ASU) **800** was not simulated, hence the question marks (shown in Fig. 7) indicating that the precise total electric power generated is presently unknown because the precise amount of power that must be drawn off to power the ASU **800** is not known. However, the power draw of the ASU **800** is relatively minor, and therefore it can be assumed that the net electrical output of the system **1000** shown in Fig. 7 is approximately 14 megawatts (MW) for a sulfuric acid plant producing 615 tonnes per day of sulfuric acid. In addition, the system generates a net heat output of approximately 9 MW (that is not presently recovered). Specifically, the combustor generates 21 MW of waste heat and the first converter in the steam generator produces 0.8 MW of waste heat. On the other hand, approximately 11.3 MW of heat energy must be input into the bubbling chamber 900, resulting in a net heat output of about 9 MW.

For the specific scenario presented in Fig. 7 (a 615 TPD production output of sulfuric acid), the system 1000 preferably receives dry air at the rate of about 555 mol/s into the ejector 300, although this flow rate could be varied somewhat to achieve similar results. For the ejector 300, this third stage was simulated as a gas mixer with outlet pressure of 1,01 MPa (10 atm) while the sulfur dioxide concentration in the ejector outlet was set to 11,5 mol%. For the bubbling chamber 900 and combustor 200, an operating pressure of 2,03 MPa (20 atm) was chosen. Sulfur was supplied to the bubbling chamber at 2,03 MPa (20 atm) and 150°C.

For this specific scenario, the hot sulfur gas exiting the combustor 200 is assumed to be at a temperature of approximately 1800 C° (i.e. 2073 K) and at a pressure of about 2,03 MPa (20 atm). This hot sulfur gas is mixed in the ejector 300 with the 555 mol/s of dry air so that the resulting mixed working gas exiting the ejector 300 has a temperature of about 1350°C (1623 K) and a pressure of about 1,01 MPa (10 atm). The exit temperature of the gas turbine 400 is set to be about 1200 K so as to allow a high enough outlet pressure, which was calculated to be 0,15 MPa (1.5 atm). The second converter was simulated as a thermally neutral reactor by using a high enough cooling air flow rate. The steam turbine 600 was simulated to have an overall conversion efficiency of 23,7% similar to that reported by Harman and Williamson (see Applied Energy (3), 24-40, 1977).

Referring now to FIG. 8, there is shown another main embodiment of the present invention, namely a "semi-closed" system **2000** adapted for combusting an adequate volume of sulfur in relation to a required production volume of sulfuric acid in a sulfuric acid plant and for subsequently expending all (or substantially all) of the product of the combustion reaction, namely the sulfur dioxide, in a gas turbine configured as "topping" device preceding a steam-raising system. This system also enables energy recovery from the manufacture of sulfuric acid. The combined semi-closed cycle system **2000** comprises eight main stages (**I₁ II, III, IV, V, VI, VIII,** and **IX)** each having at least one unit to assist in the process of burning sulfur to produce sulfur dioxide for generating electric power. As illustrated in Fig. 8, in a second main embodiment of the present invention, the Brayton-cycle of the system **2000** comprises a compressor **100** at stage I, a combustor **200** at stage **II,** an ejector **300** at stage III, and a gas turbine **400** at stage **IV** which is mechanically coupled to, and thus drives, the oxygen compressor **100**. The Rankine-cycle of the system **2000** comprises a heat-recovery steam generator (HRSG) **500** at stage **V,** and a steam turbine **600** at stage **VI** <u>connected by line **18**.</u> The system **2000** also comprises an oxygen source **800** at stage VIII (also known as the air separation unit), and a sulfur-submerged combustion furnace **900** at stage IX (also known as the bubbling chamber).

Preferably, sulfur dioxide gas is obtained by melting sulfur, evaporating it by bubbling oxygen **60** through the molten sulfur **70** in the submerged-combustion furnace **900** at stage IX, and oxidizing the sulfur vapor using oxygen in the combustor **200** at stage II. As shown in Fig. 5, $S_8$ is delivered via conduit **80** in the bubbling chamber (sulfur evaporator **900**). To minimize heat damage to the components at stage IV (e.g. the turbine blades), predetermined amounts of recycled sulfur dioxide (i.e. the recycled part of working fluid 7) is mixed with the hot $SO_2$ from the combustor **200** to cool the hot $SO_2$ so that the resulting temperature of the mixture of hot and cool $SO_2$ is less than the metallurgic limit of the turbine blades of stage **IV.** Recycling of sulfur dioxide gas in a semi-closed system therefore overcomes the challenge of handling excessive combustion temperatures. The use of an ejector **300** at stage **III** transfers the energy produced during combustion to the working fluid mixture at a much lower temperature (see N. Lior, "Advanced Energy Conversion to Power", Energy Convers. Mgmt, Vol. 38, No. 10-13, pp. 941-955 (1997) and see also US 6,138,456). The $SO_2$ return is delivered to ejector **300** through conduit **11**. Carrying out the stage IX of submerged sulfur combustion under pressure makes it possible to utilize the energy of the gas for circulation of the gas mixture in the system.

To partially summarize, the semi-closed cycle system **2000** recycles $SO_2$ (via conduits 9 and 11) that emerges from the heat recovery steam generator **500**. This excess $SO_2$ is recycled into the ejector **300,** in lieu of a predetermined amount of dry air (as was done in the system **1000** of Fig. 6). This excess, recycled sulfur dioxide also cools the gas emitted by the combustor to enable the turbine to function without giving rise to heat damage to the turbine blades. In system **2000,** air is introduced only at the air separation unit **800** while, as in the other main embodiment, $S_8$ is introduced to the bubbling chamber **900**. The combustor **200** combusts $S_2$, $SO_2$ and $O_2$ to create $SO_2$. The only gas emerging from the combustor **200** is sulfur dioxide which is <u>delivered via line 6 into the ejector 300 where it is</u> mixed with recycled cool sulfur dioxide so that the ejector 300 ejects only sulfur dioxide and the turbine 400 only works on sulfur dioxide. As a result, only sulfur dioxide is delivered <u>via line **10**</u> to the sulfuric acid plant and a portion is tapped off for return <u>via line **11**</u> into the ejector **300** for cooling.

Four practical examples are now presented below merely for the purposes of illustration. The reader should not look to the precise values (temperatures, pressures, etc.) that are referenced in each of these examples as, in any way, limiting the scope of the invention, which is defined solely by the appended set of claims. These examples are based on the examples provided by Mukhlenov et al. in GB 1560524.

Example I

A gas mixture containing 65.5 per cent by volume (64,328 kg/hr) of sulfur dioxide, 34.0 per cent by volume (16,309 kg/hr) of oxygen and 0.5 per cent by volume (213 kg/hr) of inert gas was delivered under a pressure of 1,52 MPa (15 atm) and at temperature of 650° C into the ejector, where the gas mixture was mixed with a circulating gas.

At the exit from the injector, the gas composition was follows: 0.04 per cent by volume (78 kg/hr) of sulfur trioxide, 49.2 per cent by volume (71 ,269 kg/hr) of sulfur dioxide, 37.94 per cent by volume (268,249 kg/hr) of oxygen, and 12.82 per cent by volume (79,327 kg/hr) of nitrogen. The temperature of the gas mixture was 350 to 550° C and the pressure was 1,01 MPa (10 atmospheres).

As is shown in FIG. 6 and Fig. 8, the sulfur dioxide and the sulfur vapor exits from the vaporizer (bubbling chamber) 900. at stage IX as stream 5 at a temperature not exceeding 700-800° C and is then directed into the combustor 200 at stage III. Secondary oxygen in a stoichiometric quantity, which is introduced into the combustion reactor 200 through the line 4B from the air separation unit 800, oxidizes the sulfur vapor in the presence of sulfur dioxide gas.

As is illustrated in FIG. 6 and Fig. 8, molten sulfur, having a temperature of 140 to 150° C, is delivered through conduit 3 into the bubbling chamber (submerged combustion furnace) 900 at stage IX. The sulfur is preferably evaporated by bubbling oxygen through molten sulfur at a temperature at which the sulfur boils, which ensures maximum evaporation of the sulfur. The sulfur is preferably evaporated and the sulfur vapor oxidized under a pressure, e.g., from 1,01 to 3,55 MPa (10 to 35 atmospheres). Oxygen obtained from the air separation unit 800, and introduced into the bubbling chamber by line 4A, is sparged through the molten bed of sulfur. The oxygen obtained from the air separation unit 800, using the system 2000, comprises substantially pure oxygen as the only gas.

The use of substantially pure oxygen as an oxidizing agent instead of air not only avoids atmospheric water and salt (thus obviating any potential corrosion problems) but also avoids the potential problem of using other gases which could interfere with the combustion of sulfur and the recirculation of sulfur dioxide in the system 2000. Typically, the oxygen should have a purity > 95 wt% to avoid these potential problems. The sulfur dioxide purity is directly affected by the purity of the oxygen used in the process. Any inert contaminants may be purged from time to time.

The oxygen delivery rate is calculated with respect to the heat and material balance, and depends on the process parameters. Because of the chain character of the burning process, sulfur vapor bums in oxygen in tenths of a second producing $SO_2$ gas. The temperature inside a bubble rises suddenly and attains a level close to the theoretical temperature of adiabatic burning sulfur in oxygen (about 3000-3500° C). As each gas bubble rises through the molten sulfur (as schematically depicted in Figure 5), the gas bubble exchanges its heat with the molten bed and substantial quantities of sulfur are also vaporized. In fact, the mass of sulfur in the vapor exiting the vaporizer can be more than 10 times the mass of sulfur that produced the $SO_2$. During the process, the gas bubbles do not come into direct contact with the elements of the apparatus, and the walls of the reaction chamber are not heated above the temperature of the melt. For further details regarding the bubbling chamber, see GB 1560524 (Mukhlenov et al.) entitled "Method of Preparing Sulfur Dioxide".

The concentration of oxygen in the blowing gas can be as high as 100 percent by volume, and bubbling of oxygen through molten sulfur at its boiling point, or at a lower temperature, markedly increases the evaporation surface so as to intensify the process by 1.5-3 times as compared with previously known methods. Subsequently, the temperature of the medium at the bubbling stage does not exceed 700-800° C, which makes it possible to use common (non-refractory) construction materials.

The composition of the vapor-gas mixture, as it flows from the bubbling chamber 900, is determined by the process parameters, such as pressure, temperature, and the heat loss. The sulfur vapor may comprise diatomic sulfur gas or a combination of various sulfur species. Fig. 5A illustrates the constitution of sulfur vapor at various temperatures and, as is illustrated, the predominant species in sulfur vapor at temperatures above 600°C is diatomic sulfur ($S_2$). In the method described, the heat of the reaction in the bubbling zone of the furnace is consumed to evaporate sulfur, and to heat the melt to working temperature. The composition of the mixture can be regulated by withdrawing part of the heat using special heat-exchangers located in the bubbling bed.

Since a great part of the heat is utilized in the process, vapor, which is characterized by high energy, can be produced.

The method will be further described with reference to the following illustrative examples, which are also presented merely to illustrate the working of the present invention.

Example 2

In this particular example, the cross-sectional area of the bubbling chamber (Figure 5) was about 3 $m^2$, and its diameter was 2 meters. The height of the sulfur melt was maintained at 1 metre (under stationary conditions). The bubbling chamber was an apparatus 3.5 m high. The height of the separation space above the melt was 0.8 m, and the height of the settling zone was 1.2 m. The hot, low-viscosity sulfur at a temperature of 140-150° C was delivered into a bubbling chamber. The consumption rate of sulfur was 7370 kg/hr. Technical oxygen, containing up to 2 % by volume of inert gas, was used.

The process was effected under a pressure of 1,01 MPa (10 atm) and at a temperature of the melt equal to the boiling point of sulfur at a given pressure-646.1° C (according to The Sulfur Data Book, Freeport Sulfur Company (1954)). This temperature was maintained in the bubbling chamber by the heat liberated in the oxidation reaction of part of the sulfur with oxygen as it was bubbled through the molten sulfur. The quantity of oxygen at a temperature of 15-20° C used for bubbling, under stabilized process conditions, was 626.5 kg/hr or 438.5 $m^3$/hr (at STP). The quantity of inert gas that was bubbled together with oxygen was 28.9 kg/hr or 23.1 $m^3$/hr (at STP).

During the starting period, oxygen was heated to a temperature of 350-400° C. As the process conditions became stabilized, the oxygen reacted in the melt with the sulfur vapor. The reaction inside the gas bubbles was completed. A vapor-gas mixture was formed as a result in the space above the molten sulfur, the mixture consisting of sulfur vapor - 6743 kg/hr or 4720 $m^3$/hr at STP, sulfur dioxide - 1253 kg/hr or 433.5 $m^3$/hr at STP, and inert gases - 28.9 kg/hr or 23.1 1 $m^3$/hr at STP. The output capacity of bubbling chamber was 2500 kg/hr x $m^3$.

Example 3

In this further example, the process was carried out as described in Example 1, except that the pressure was 1,52 MPa (15 atm), and the temperature of the molten sulfur was maintained at 650° C, which was below the boiling point of sulfur at this pressure. Liquid sulfur - 20,412 kg/hr was evaporated in the bubbling chamber by passing - 1113.9 kg/hr of technical oxygen containing 15% by weight of inert gas admixtures. As a result, - 19,347.3 kg/hr of sulfur vapor, - 2130 kg/hr of sulfur dioxide, and - 49 kg/hr of nitrogen were obtained.

Example 4

In this further example, the process was carried out as described in Example 1, except that the pressure was 2,53 MPa (25 atm), and the temperature of the molten sulfur was maintained at 650° C, which was below the boiling point of sulfur at this pressure. Excess heat was withdrawn by heat-exchangers that were located directly in the molten sulfur bed. Liquid sulfur having a temperature of 140-150° C was a delivered into bubbling chamber at a rate of - 30,234 kg/hr. The height of the molten sulfur bed was 3 metres, and its height was 16 metres. Technical oxygen was delivered into the apparatus under a pressure of 2,53 MPa (25 atm) at a rate of - 4559.9 kg/hr. The amount of delivered nitrogen was - 20 kg/hr.

The gaseous mixture discharged from the bubbling chamber consisted of sulfur vapor - 25,675 kg/hr, which was 81.2% per volume, sulfur dioxide - 9120 kg/hr, which was 18.4% per volume, and inert gases -20 kg/hr or 0.42% per volume.

## Claims

1. A method of generating electrical power using sulfur, the method comprising steps of:

   combusting oxygen with a stoichiometric quantity of sulfur vapor comprising diatomic sulfur to generate hot sulfur dioxide gas; and
   mixing a cooling gas cooler than the hot sulfur dioxide gas with the hot sulfur dioxide gas to produce a mixed working gas for driving a gas turbine (400), the mixed working gas having a temperature less than a maximum allowable temperature determined by a metallurgic limit of turbine blades in the gas turbine, whereby the gas turbine generates electrical power.

2. The method as claimed in claim 1 wherein the cooling gas that is mixed with the hot sulfur dioxide gas is dry air.

3. The method as claimed in claim 1 wherein the cooling gas that is mixed with the hot sulfur dioxide gas is recycled sulfur dioxide gas.

4. The method as claimed in any one of claims 1 to 3 wherein the gas turbine drives an oxygen compressor (100) for compressing oxygen received from an air separation unit (800) that separates oxygen gas from nitrogen gas, the oxygen compressor supplying oxygen to the combustor and to a sulfur evaporator (900) serving as a bubbling chamber for converting supplied $S_8$ into the sulfur vapor that comprises diatomic sulfur.

5. The method as claimed in any one of claims 1 to 4 further comprising steps of:

   generating steam from the sulfur dioxide discharged by the gas turbine and;
   generating additional electrical power using the steam to drive a steam turbine(600).

6. The method as claimed in any one of claims 1 to 5 further comprising a step of delivering sulfur dioxide to a sulfuric acid plant for manufacturing sulfuric acid.

7. The method as claimed in claim 6 wherein the delivering step comprises a step of diverting a portion of the sulfur dioxide from a conduit leading from a steam generator to the sulfuric acid plant in order to supply cool sulfur dioxide to an ejector in which the cool sulfur dioxide is mixed with hot sulfur dioxide discharged by the combustor prior to both being ejected into the gas turbine.

8. A system (1000,2000) that generates electrical power using sulfur, the system comprising:

   a sulfur vaporizer (900) for generating sulfur vapor;
   a combustor (200) for combusting oxygen with the sulfur vapor that comprises diatomic sulfur to produce hot sulfur dioxide gas; and
   an ejector (300) for mixing the hot sulfur dioxide gas with a cooling gas injected into the ejector in a sufficient quantity that a resulting mixture of the hot sulfur dioxide and the cooling gas has a temperature less than a maximum allowable temperature determined by the metallurgic limit of turbine blades of a gas turbine (400), the gas turbine being driven by the mixture of hot sulfur dioxide and cooling gas to generate electrical power.

9. The system as claimed in claim 8 wherein the gas turbine drives an oxygen compressor (100) for compressing oxygen to be supplied to the combustor.

10. The system as claimed in claim 9 wherein the oxygen compressor supplies oxygen to the sulfur vaporizer (900) that includes a bubbling chamber to convert supplied $S_8$ into the sulfur vapor that comprises diatomic sulfur.

11. The system as claimed in any one of claims 8 to 10 further comprising an air separation unit (800) for separating air into oxygen and nitrogen gases, the air separation unit supplying oxygen to the oxygen compressor.

12. The system as claimed in any one of claims 8 to 11 wherein the cooling gas injected into the ejector is dry air.

13. The system as claimed in any one of claims 8 to 11 wherein the cooling gas injected into the ejector is recycled sulfur dioxide gas that is diverted from a point downstream of the gas turbine.

14. The system as claimed in any one of claims 8 to 13 wherein the gas turbine discharges sulfur dioxide gas into a steam generator (500) that uses residual heat in the sulfur dioxide gas to generate steam to drive a steam turbine (600) for generating additional electrical power.

**Patentansprüche**

1. Verfahren zur Stromerzeugung unter Verwendung von Schwefel, wobei das Verfahren folgende Schritte umfasst:

   Verbrennung von Sauerstoff mit einer stöchiometrischen Menge von Schwefeldampf, der zweiatomigen Schwefel enthält, um heißes Schwefeldioxidgas zu erzeugen; und
   Mischung eines Kühlgases, das kühler als das heiße Schwefeldioxidgas ist, mit dem heißen Schwefeldioxidgas, um ein gemischtes Arbeitsgas zum Antrieb einer Gasturbine (400) zu erzeugen, wobei die Temperatur des gemischten Arbeitsgases niedriger als eine höchstzulässige Temperatur ist, die durch eine metallurgische Grenze der Turbinenschaufeln in der Gasturbine bestimmt ist, wobei die Gasturbine Strom erzeugt.

2. Verfahren wie in Anspruch 1 beansprucht, worin das Kühlgas, das mit dem heißen Schwefeldioxidgas gemischt wird, trockene Luft ist.

3. Verfahren wie in Anspruch 1 beansprucht, worin das Kühlgas, das mit dem heißen Schwefeldioxidgas gemischt wird, recyceltes Schwefeldioxidgas ist.

4. Verfahren wie in irgendeinem der Ansprüche 1 bis 3 beansprucht, worin die Gasturbine einen Sauerstoffkompressor (100) zum Komprimieren von Sauerstoff antreibt, welcher Sauerstoff aus einer Luftzerlegungseinheit (800) erhalten wird, die Sauerstoffgas von Stickstoffgas trennt, wobei der Sauerstoffkompressor den Verbrenner und einen Schwefelverdampfer (900) mit Sauerstoff beaufschlagt, welcher Schwefelverdampfer als Blasenkammer zur Umwandlung des beaufschlagten $S_8$ in den Schwefeldampf, der zweiatomigen Schwefel enthält, dient.

5. Verfahren wie in irgendeinem der Ansprüche 1 bis 4 beansprucht, ferner folgende Schritte umfassend:

   Erzeugung von Dampf aus dem Schwefeldioxid, das von der Gasturbine abgelassen wird, und
   Erzeugung von zusätzlichem Strom durch Verwendung des Dampfes zum Antrieb einer Dampfturbine (600).

6. Verfahren wie in irgendeinem der Ansprüche 1 bis 5 beansprucht, ferner den Schritt umfassend, Schwefeldioxid an eine Schwefelsäure-Anlage zur Herstellung von Schwefelsäure zu liefern.

7. Verfahren wie in Anspruch 6 beansprucht, worin der Schritt der Lieferung einen Schritt umfasst, in dem ein Anteil des Schwefeldioxids von einer Leitung abgeleitet wird, die von einem Dampferzeuger zur Schwefelsäure-Anlage führt, um kühles Schwefeldioxid an einen Ejektor zu liefern, in welchem das kühle Schwefeldioxid mit heißem Schwefeldioxid gemischt wird, das von dem Verbrenner abgelassen wird, bevor die beiden in die Gasturbine ausgestoßen werden.

8. System (1000, 2000) zur Stromerzeugung unter Verwendung von Schwefel, wobei das System Folgendes umfasst:

   einen Schwefelverdampfer (900) zur Erzeugung von Schwefeldampf;
   einen Verbrenner (200) zur Verbrennung von Sauerstoff mit dem Schwefeldampf, der zweiatomigen Schwefel enthält, um heißes Schwefeldioxidgas zu erzeugen; und
   einen Ejektor (300) zur Mischung des heißen Schwefeldioxidgases mit einem Kühlgas, das in den Ejektor in einer ausreichenden Menge eingespritzt wird, so dass eine resultierende Mischung des heißen Schwefeldioxids und des Kühlgases eine Temperatur aufweist, die niedriger als eine höchstzulässige Temperatur ist, die durch die metallurgische Grenze der Turbinenschaufeln einer Gasturbine (400) bestimmt ist, wobei die Gasturbine von der Mischung des heißen Schwefeldioxids und des Kühlgases zur Stromerzeugung angetrieben wird.

9. System wie in Anspruch 8 beansprucht, worin die Gasturbine einen Sauerstoffkompressor (100) zum Komprimieren von Sauerstoff antreibt, womit der Verbrenner beaufschlagt werden soll.

10. System wie in Anspruch 9 beansprucht, worin der Sauerstoffkompressor den Schwefelverdampfer (900) mit Sauerstoff beaufschlagt, welcher Schwefelverdampfer eine Blasenkammer zur Umwandlung des beaufschlagten $S_8$ in den Schwefeldampf, der zweiatomigen Schwefel enthält, umfasst.

11. System wie in irgendeinem der Ansprüche 8 bis 10 beansprucht, ferner eine Luftzerlegungseinheit (800) umfassend, die Luft in Sauerstoff und Stickstoffgase trennt, wobei die Luftzerlegungseinheit den Sauerstoffkompressor mit Sauerstoff beaufschlagt.

12. System wie in irgendeinem der Ansprüche 8 bis 11 beansprucht, worin das Kühlgas, das in den Ejektor eingespritzt wird, trockene Luft ist.

13. System wie in irgendeinem der Ansprüche 8 bis 11 beansprucht, worin das Kühlgas, das in den Ejektor eingespritzt wird, recyceltes Schwefeldioxidgas ist, das von einer Stelle stromabwärts der Gasturbine abgeleitet wird.

14. System wie in irgendeinem der Ansprüche 8 bis 13 beansprucht, worin die Gasturbine Schwefeldioxidgas in einen Dampferzeuger (500) ablässt, der die Restwärme im Schwefeldioxidgas zur Erzeugung von Dampf verwendet, um eine Dampfturbine (600) zur Erzeugung von zusätzlichem Strom anzutreiben.

**Revendications**

1. Procédé de production d'électricité à partir de soufre, le procédé comprenant les étapes consistant à :

   - brûler de l'oxygène avec une quantité stoechiométrique de vapeur de soufre constituée de soufre diatomique, pour produire du dioxyde de soufre gazeux brûlant ; et
   - mélanger au dioxyde de soufre gazeux brûlant un gaz de refroidissement plus froid que celui-ci afin de produire un mélange gazeux de travail permettant d'entraîner une turbine à gaz (400), la température du mélange gazeux de travail étant inférieure à un seuil maximal admissible déterminé par la limite métallurgique des pales de la turbine à gaz, de sorte que la turbine à gaz produise de l'électricité.

2. Procédé selon la revendication 1, dans lequel le gaz de refroidissement mélangé au dioxyde de soufre gazeux brûlant est de l'air sec.

3. Procédé selon la revendication 1, dans lequel le gaz de refroidissement mélangé au dioxyde de soufre gazeux brûlant est du dioxyde de soufre gazeux recyclé.

4. Procédé selon l'une quelconque des revendications 1 à 3, dans lequel la turbine à gaz entraîne un compresseur d'oxygène (100) destiné à comprimer l'oxygène reçu d'une unité de séparation d'air (800) qui dissocie l'oxygène gazeux de l'azote gazeux, le compresseur d'oxygène alimentant en oxygène le dispositif de combustion et un évaporateur de soufre (900) servant de chambre de barbotage pour convertir le $S_8$ amené en vapeur de soufre constituée de soufre diatomique.

5. Procédé selon l'une quelconque des revendications 1 à 4, comprenant en outre les étapes consistant à :

- produire de la vapeur à partir du dioxyde de soufre refoulé par la turbine à gaz et ;
- produire un supplément d'électricité à partir de la vapeur, afin d'entraîner une turbine à vapeur (600).

6. Procédé selon l'une quelconque des revendications 1 à 5, comprenant en outre une étape de fourniture de dioxyde de soufre à une installation d'acide sulfurique destinée à fabriquer de l'acide sulfurique.

7. Procédé selon la revendication 6, dans lequel cette étape de fourniture comprend une étape consistant à dévier une partie du dioxyde de soufre issu d'une conduite menant d'un générateur de vapeur à l'installation d'acide sulfurique, afin d'alimenter en dioxyde de soufre froid un éjecteur dans lequel le dioxyde de soufre froid est mélangé au dioxyde de soufre brûlant refoulé par le dispositif de combustion, avant d'être éjecté dans la turbine à gaz.

8. Système (1000, 2000) de production d'électricité à partir de soufre, le système comprenant :

- un vaporisateur de soufre (900) destiné à produire de la vapeur de soufre ;
- un dispositif de combustion (200) destiné à brûler de l'oxygène avec la vapeur de soufre constituée de soufre diatomique, afin de produire du dioxyde de soufre gazeux brûlant ; et
- un éjecteur (300) destiné à mélanger le dioxyde de soufre gazeux brûlant avec un gaz de refroidissement injecté dans l'éjecteur en quantité suffisante pour que la température du mélange résultant soit inférieure à un seuil maximal admissible déterminé par la limite métallurgique des pales de la turbine à gaz (400), celle-ci étant entraînée par le mélange de dioxyde de soufre gazeux brûlant et de gaz de refroidissement pour produire de l'électricité.

9. Système selon la revendication 8, dans lequel la turbine à gaz entraîne un compresseur d'oxygène (100) destiné à comprimer l'oxygène qui doit alimenter le dispositif de combustion.

10. Système selon la revendication 9, dans lequel le compresseur d'oxygène alimente en oxygène le vaporisateur de soufre (900) qui contient une chambre de barbotage destinée à convertir le $S_8$ amené en vapeur de soufre constituée de soufre diatomique.

11. Système selon l'une quelconque des revendications 8 à 10, comprenant en outre une unité de séparation d'air (800) destinée à dissocier l'air en oxygène gazeux et en azote gazeux, l'unité de séparation d'air alimentant en oxygène le compresseur d'oxygène.

12. Système selon l'une quelconque des revendications 8 à 11, dans lequel le gaz de refroidissement injecté dans l'éjecteur est de l'air sec.

13. Système selon l'une quelconque des revendications 8 à 11, dans lequel le gaz de refroidissement injecté dans l'éjecteur est du dioxyde de soufre gazeux recyclé qui est dévié à partir d'un point situé en aval de la turbine à gaz.

14. Système selon l'une quelconque des revendications 8 à 13, dans lequel la turbine à gaz refoule le dioxyde de soufre gazeux dans un générateur de vapeur (500) qui exploite la chaleur résiduelle du dioxyde de soufre gazeux pour produire de la vapeur destinée à entraîner une turbine à vapeur (600) pour produire un supplément d'électricité.

FIG. 1. Mass and energy flows in conventional contact sulphuric acid plant.

ENERGY INPUT        PROCESS        ENERGY OUTPUT

Dry Air

293 K
726 mol/sec      7.9 MW

**Compressor**

650 K

11.6 MW

Sulphur 39.0 mol/sec    →     **Combustor**

1150 K

**Gas Turbine**      11.4 MW        3.5 MW

650 K

10.0 MW

Sulphur 33.6 mol/sec    →     **Burner**

**Boiler**      9.0 MW

700 K

4.9 MW

→ **Converter**

900 K

**Superheater**      4.9 MW      21.1 MW    Steam Turbine    5.0 MW

700 K                 Steam

2.2 MW

Cooling Air 70-80 mol/sec    →     **Converter**

720 K

**Economizer**      7.2 MW

< 470 K        8.5 MW net

**Absorber**

$H_2SO_4$ 615 tonnes/day

FIG. 2. Energy flow in the gas turbine modified sulphuric acid plant      PRIOR ART Harman

Fig. 3. JP60191007    PRIOR ART

**Fig. 4.** JP60191008      PRIOR ART

Fig. 5

Sulphur Evaporator **900**

Fig. 5A

Equilibrium composition of sulphur vapour

Fig. 6

1000

**Bubbling Chamber 900** — IX

S₂, SO₂
$S_2, SO_2$

**Combustor 200** — II

SO₂
$SO_2$

**Ejector 300** — III

10-12% SO₂, N₂, and excess O₂ relative to stoichiometric amount necessary for SO₂ oxidation

Steam Turbine 600 — VI

O₂ Compressor 100 — I

Gas Turbine 400 — IV

Heat Recovery Steam Generator 500 — V

Dry Air in predetermined amount relative to concentration of SO₂ (10-12%) and metallurgic limit temperature of turbine inlet

10-12% SO₂, N₂, and excess O₂ relative to stoichiometric amount necessary for SO₂ oxidation

N₂ out

Air Separation 800 — VIII

Air in

Sulphuric Acid Plant

Steam

O₂
$O_2$

FIG. 7. Energy flow in modified sulphuric acid plant in accordance with the present invention

Fig. 8

2000

**REFERENCES CITED IN THE DESCRIPTION**

**Patent documents cited in the description**

- JP 60191007 B
- JP 60191008 B
- JP 60191009 B
- JP 60221307 B

- JP 11263606 A
- US 6138456 A
- GB 1560524 A

**Non-patent literature cited in the description**

- **R.T.C. HARMAN et al.** Gas turbine topping for increased energy recovery in sulfuric acid manufacture. *Applied Energy,* 1977, vol. 3
- **HARMAN.** Gas turbine topping for increased energy recovery in sulfuric acid manufacture. *Applied Energy,* 1977, vol. 3

- **N. LIOR.** Advanced Energy Conversion to Power. *Energy Convers. Mgmt,* 1997, vol. 38 (10-13), 941-955